# EUROPEAN PATENT APPLICATION

(11) **EP 1 547 906 A1**
(43) Date of publication of application: **29.06.2005**
(21) Application number: 04030066.7
(22) Date of filing: 18.12.2004
(51) Int. Cl.: B62D 7/18, B60K 17/30

(54) **Suspension arrangement**

(30) Priority: 23.12.2003 GB 0329676
(71) Applicant: AGCO GmbH, 87616 Marktoberdorf (DE)
(72) Inventor: Honzek, Robert, 87647 Oberthingau (DE)
(74) Representative: Morrall, Roger

(57) **Abstract**

A suspension arrangement for the steering wheels of agricultural tractors and the like utility vehicles is described, having steering wheels 12 connected with driven hubs 19. The hubs are mounted on hub carriers 16 which are pivotally mounted about substantially vertically positioned swivelling axes 15a on an axle housing (2,3,4), which are movable up and down with respect to the vehicle body (8).

The pivotal axes (15a) of the hub carriers (16) are positioned a distance (A) behind the axes (12a) of the wheels (12) when the wheels are turned in forward driving position to give the vehicle an improved maximum steering angle (a) before the wheels contact the vehicle body (8).

## Description

The invention refers to a suspension arrangement for the steering wheels of agricultural tractors and the like utility vehicles, having steering wheels connected with driven hubs, the hubs being mounted pivotally on hub carriers, the hub carriers being pivotally mounted about substantially vertical positioned swivelling axes.

A suspension arrangement of this kind is known from DE 41 41 793 A1. The steering axle includes a rigid axle casing. Substantially vertical steering swivel pins are positioned on end regions of the axle to provide for steering of the wheels. Such steering axles are used on high horsepower vehicles having all-wheel drive. A substantial part of the entire power is transferred to the ground by the wheels of the steering axle. The drive of the wheels includes two half shafts in form of universally jointed cardan shafts. The universal joint of the cardan shaft is positioned exactly on the axis of the steering swivel pin.

The wheels attached to the steering axle have diameter nearly as large as the diameters of the rear wheels of the vehicle to facilitate transfer of power to the ground. It is advantageous to equip the front steering axle with wheels of as large a diameter as possible to maximise traction. However, large diameter steering wheels restrict vehicle manoeuvrability, because the maximum possible steering angle of larger wheels in general is smaller than that of smaller wheels compared on a vehicle having the same dimensions.

The reason for this is the fact that the tyre tread or the generating curve of an envelope of the tyre of the wheel facing the centre of a curve or its mud guard contacts elements of the vehicle at small steering angles and prevents greater steering angles. Vehicles equipped with large diameter wheels have a larger turning circle, reducing their manoeuvrability. However, manoeuvrability is an important characteristic of a vehicle, e.g. for a tractor used in a ploughing operation, to facilitate narrow headlands of fields.

DE 35 44 525 C2 shows lateral constrictions of a housing associated with a steering axle, in to which portions of the wheel facing on the inside of a curve can enter to increase the maximum possible steering angle and to improve the manoeuvrability of a vehicle having front wheels of larger diameter.

EP 0 694 430 B1 describes a further possibility to increase the maximum steering angle. The chassis of the tractor is designed in a modified way. Constrictions are provided which the front and in rear parts of the wheels can enter at maximum steering angle. Such accommodation of the wheels make the design of the respective parts of the tractor unnecessarily complex, causes production difficulties and negatively influences the entire design and the dimensions of the affected parts of the vehicle.

It is an object of the invention to provide a suspension arrangement of the type described above which improves the manoeuvrability of the vehicle and reduces the requirement for special parts

According to the invention this is achieved by arranging the substantially vertical pivotal axes of the hub carriers to be positioned at a distance behind the axes of rotation of the wheel hubs when the hubs are positioned such that their plane of rotation is in substantially parallel alignment with a longitudinal axis of the said vehicle.

The displacement of the pivotal axes to the rear makes the effective radius of the tyre tread of the wheel facing the rear smaller. Since this rear part of the tyre tread pivots on a circular path having a corresponding smaller radius it makes it possible to use greater steering angles compared with steering axles of the known type. The tyre tread contacts the chassis later. Consequently, the suspension arrangement provides a greater possible maximum steering angle. The vehicle has good manoeuvrability without the need for special constrictions in parts of the vehicle adjacent to the wheels. If the suspension arrangement is at the front of the vehicle, constrictions are not necessary with respect to the front part of the vehicle, because the part of the wheel on the outside of a curve can pivot in front of the chassis or hood.

The invention may be applied not only on vehicles having a rigid steering axle but also on vehicles having a wheel suspension with transverse and longitudinal control arms.

The displacement of the pivot axes to the rear results the universally jointed cardan shaft and the steering swivel pins not requiring as much space. This broadens the freedom of the design possibilities with respect to the construction, dimensions and location of the steering swivel pins.

Service and maintenance work of the steering swivel pins can be done more easily due to improved accessibility. The mud guards of the steering wheels of vehicles on known construction usually are supported directly above the jointed cardan shaft on the housing of the hub. The steering swivel pins and the upper access to it are positioned directly below the mud guards. Necessary maintenance work of the steering swivel pins requires the demounting of the mud guards to give the necessary access. This disadvantage is overcome by the invention. The region above the jointed cardan shaft is completely free for fixing of the mud guard. The possibilities to fix the mud guards or to use different tracks or different depth of wheel rim are increased.

A useful improvement in connection with an increase of the maximum possible steering angle is the design of a rigid steering axle in form of an arrow directed to the front. This design gives the possibility to increase the steering angle of the wheels, i.e. it is increased by an amount equal to the chosen arrow angle, together with the same movement of the universally jointed cardan shaft without giving higher load to the double-jointed cardan shaft and to the axial bearings of the double-jointed cardan shaft. This design uses the advantage that the actual steering angles of the steered wheels are not the same. The steering angle of the wheel facing the outside of a curve always is smaller than the steering angle of the wheel facing the centre of a curve. For example, the maximum steering angle of a wheel facing the outside of a curve of 45° corresponds to a maximum steering angle of 55° of a wheel facing the inside of a curve. If the steering axle is designed in arrow form the universally jointed cardan shaft is straight when the wheel facing the centre of a curve is turned from the straight forward position to an angle equal to the angle of the arrow construction. The maximum possible turning angle of a universally jointed cardan shaft is about 45°. Consequently, using the arrow design the steered wheel can be turned to about the sum of 45° and the arrow angle of about 5° to 10°, i.e. about 50° to 55°. However, if it is not necessary to use this advantage, there is the possibility to design the universally jointed cardan shaft with smaller dimension, because the possible transferable torque of a universally jointed cardan shaft substantially depends upon the intended turn angle.

The hub carrier can be designed to form a pitman arm and its forward extending region to be connected with a steering mechanism of the vehicle to minimize the efforts for the wheel suspension and the steering mechanism. The effective length of the pitman arm is increased by the displacement of the steering swivel pins to the rear. This advantage can be used to increase the steering force of the steering mechanism or to decrease the dimensions of the actuators (hydraulic cylinders) generating the power to turn the wheels.

The invention will be described in greater detail with reference to the accompanying drawings, by way of example only, in which:-
- **Fig. 1**: shows a view from above of a known axle suspension of a driven steering axle having a straight body of axle and a steering swivel pin in the middle of the axle body;
- **Fig. 2**: shows a view from above of the inventive suspension of a driven steering axle having a straight body of axle and an eccentrically arranged steering swivel pins, and
- **Fig. 3**: shows a suspension similar to the embodiment of Fig. 2, but having an axle body in form of an arrow.

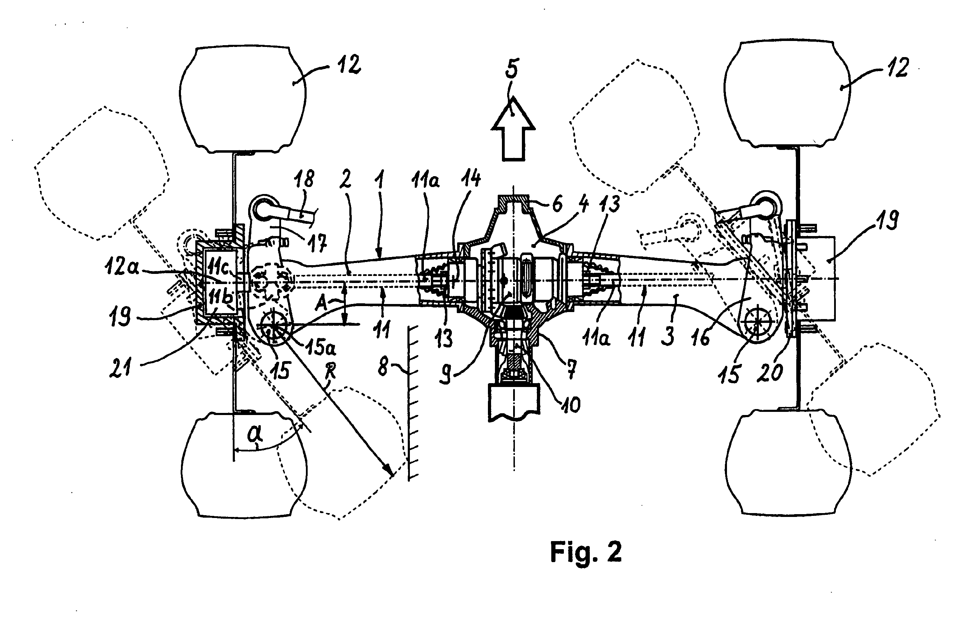

The suspension of Fig. 2 is described with respect to a tractor having a rigid steering axle. The steering axle includes an axle casing 1 which is composed of two lateral axle housings 2, 3 and a differential housing 4, the housings being connected to each other. The differential housing 4 includes a pivot pin 6 arranged in the middle of the housing and extending in the forward driving direction indicated by arrow 5. Coaxially to pin 6 a pivot pin 7 is arranged extending to the rear. The pins serve to pivotally connect the steering axle to bearings arranged centrally in a housing 8 of the vehicle chassis.

A differential gear 9 arranged in the differential housing 4 has an input shaft 10 extending through the pivotal pin 7 and is driven by the transmission of the vehicle, not shown. The axle housings 2, 3 and the differential housing 4 form a common substantially straight axle body extending perpendicular to the driving direction. Half shafts 11a of universally jointed cardan shafts 11 are mounted in the axle housings 2, 3 and extend from the differential gear 9 to drive the wheels 12. The half shafts 11a extend perpendicular to the driving direction (straight forward) in the normal position of the wheels 12. The half shafts 11a are fixedly connected for driving rotation with the elements 13 of the differential gear 9 but can slide in an axial sense relative to elements 13. The half shafts 11a are pivotally arranged about the joint 14. Consequently, a variation of length and position in the power path of the half shafts 11a during a steering motion has not influence on the drive of the wheels 12.

The free end region of the axle housings 2, 3 is broadened to the rear, i.e. opposite to the driving direction 5 and allows the arrangement of steering swivel pins 15 at a distance A behind the axis 12a of the wheels 12 when in straight forward direction. A hub carrier 16 is connected to each pivotally mounted steering swivel pin 15. Each steering swivel pin 15 has a vertically arranged pivotal axis 15a of the hub carrier 16. The hub carriers 16 form shell-like housings extending over the free end regions of the axle housings 2, 3. The front end parts of the hub carriers 16 extend to pitman arms 17 which are pivotally connected to the rods 18 of hydraulic actuators (not shown) of the steering arrangement of the vehicle. A track rod (not shown) connects the hub carriers 16 to each other.

A hub 19 is rotatably mounted on the hub carrier 16. A wheel 12 is fixed to a flange 20 of hub 19. A reduction gear 21 is located in the interior of the hub 19 reducing the high number of revolutions of the differential gear to the desired number of revolutions of the wheels 12. Universal joints 11b of cardan shafts 11 serve to transfer torque to the reduction gears 21 and further to driven shafts 1 1c of cardan shafts 11. These are able to compensate the variations in distance between the differential gear 9 and the hub carriers 16. The steering swivel pins 15 and the universal joints 11b are arranged substantially in the same distance to a pivot axis defined by the pivotal pins 6 and 7.

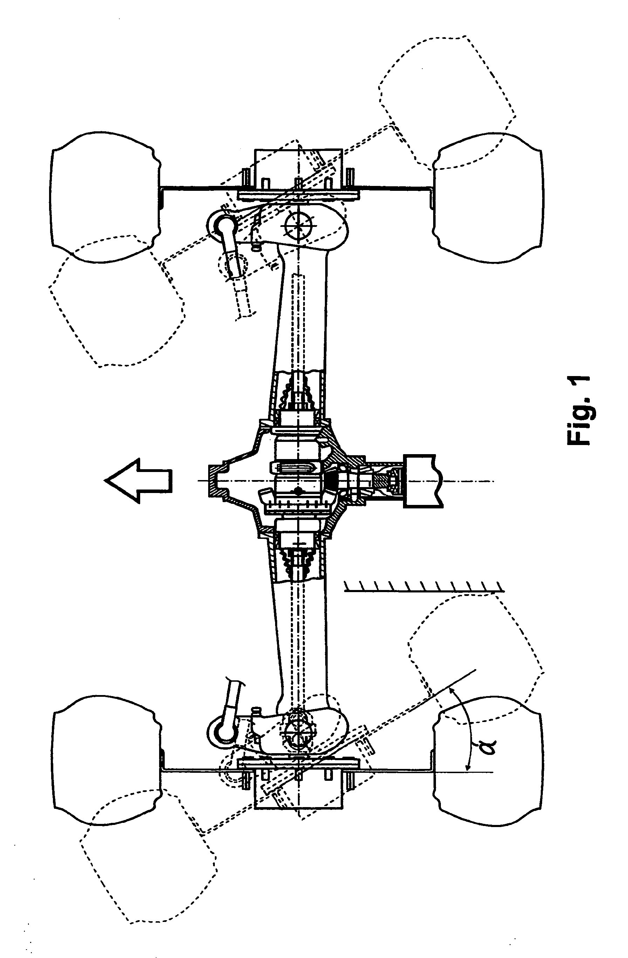

When determining the distance A of the steering swivel pins 15 from the half shafts 11a in the axle housings 2, 3 one considers that on the one hand the distance of the steering swivel pins 15 from the rear tyre tread, i.e. the radius R, with which the tyre tread pivots about an steering swivel pin 15 has to be so short that the wheel 12 on the inside of a curve, as shown by broken lines in Fig. 2, is able to pivot about the desired maximum angle α without striking the chassis of the vehicle. Compared with Fig. 1 in which similar components are similarly numbered, this angle α is substantially greater than on the suspension of Fig. 1. On the other hand the distance A must not be too large since during a steering motion of the front region of the wheel 12 on the outside of a curve must not pivot too far and strike the front part of the chassis of the vehicle. Especially with respect to vehicles including an engine to be positioned behind the steering axle this fact makes it necessary to provide openings in the chassis to receive the front regions of the wheels.

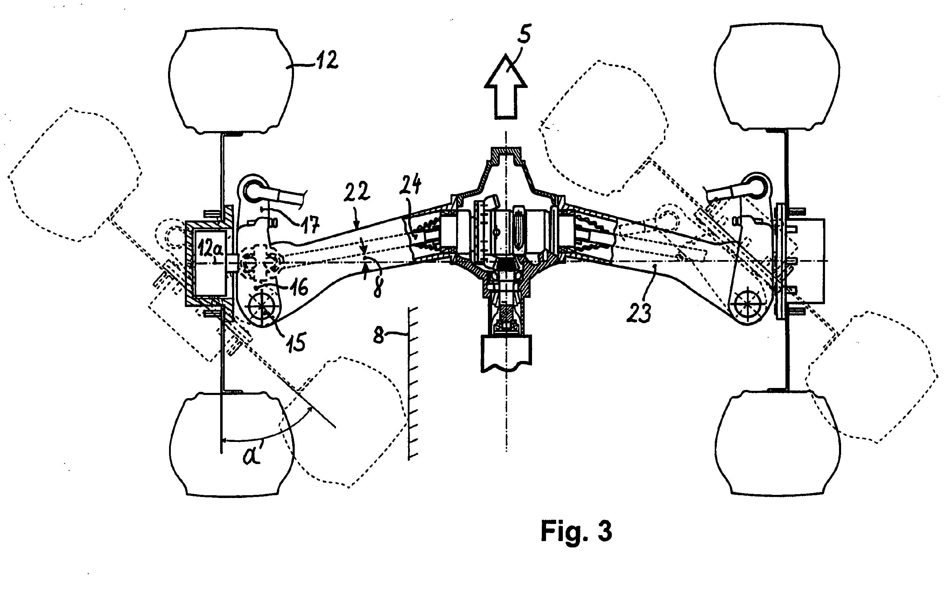

The steering axle of Fig. 3 differs from the steering axle of Fig. 2 only by the fact that the body of axle 22 is not straight but has an arrow-like shape. The drawing only shows the essentials. The amount of the arrow-like shape is defined by the arrow angle γ. The angle γ is the angle of the half shaft of the cardan shaft 24 located in the interior of the housing 23 of axle to a direction perpendicular to the driving direction straight forward. The arrow-like angle is equivalent to the surplus angle of the steering motion generated by the invention compared with the prior art. In this embodiment the arrow-like angle is about 10°. Such a design results in a substantially greater possible steering angle without making the turning angles of universal joints of the cardan shaft 24 too large, i.e. larger than admissible. Despite the greater possible steering angle the torque to be transferred by the double-joined cardan shaft can remain at the usual level.

## Claims

1. A suspension arrangement for a pair of spaced apart wheel hubs (19) of a vehicle, each hub being mounted in a respective hub carrier (16) for rotation about its own axis, wherein each hub carrier 16) is pivotally mounted about a respective substantially vertical pivot axis (15a), the arrangement being **characterised in that** the pivot axes of the hub carriers are positioned at a distance (A) behind the axes of rotation of the wheel hubs when the said hubs are positioned such that their plane of rotation is in substantially parallel alignment with a longitudinal axis of the said vehicle.

2. A suspension arrangement according to Claim 1, **characterised in that** said arrangement provides for the wheel hub carriers (16) to move vertically with respect to a body of the said vehicle.

3. A suspension arrangement according to Claim 1 or 2, **characterised in that** the said hubs are driven by respective outputs (13) of a differential (9), and wherein respective cardan shafts (11a), each comprising a universal joint (11b,14) at each end thereof, provide a driving connection from a respective differential output (13) to a respective wheel hub ( 19).

4. A suspension arrangement according to any preceding claim, **characterised in that** the wheel hubs (19) are mounted on opposite ends of a rigid axle (1).

5. A suspension arrangement according to Claim 3 or 4, **characterised in that** the axis (12a) of a wheel hub is offset in the longitudinal direction of the vehicle with respect to an axis extending transversely across the differential by an angle (γ).

6. A suspension arrangement according to Claim 5, **characterized in that** the angle (γ) is between 5 and 10 degrees.

7. A suspension arrangement according to any preceding claim, **characterised in that** each hub carrier (16) has a pitman arm (17) and the end region of the pitman arm extends to the front and is connected with a steering mechanism of the vehicle.
